# EUROPEAN PATENT SPECIFICATION

(11) **EP 2 746 235 B1**
(45) Date of publication and mention of the grant of the patent: **17.05.2017**
(21) Application number: 13466038.0
(22) Date of filing: 18.12.2013
(51) Int. Cl.: C03C 17/00, H01L 21/02, H01L 21/673, H01L 21/68, B05B 7/14, B05B 1/34

(54) **Method of creating interlayer on glass testing substrate intended for sticking chips, and applying device for carrying out of the method**
Verfahren zur Erzeugung einer Zwischenschicht auf einem Glastestsubstrat zum Aufkleben von Chips, und Auftragsvorrichtung zur Durchführung des Verfahrens
Procédé de création de couche intermédiaire sur un substrat de test de verre conçu pour coller les puces et dispositif d'application de mise en oeuvre de ce procédé

(30) Priority: 20.12.2012 CZ 20120940
(43) Date of publication of application: 25.06.2014
(73) Proprietor: MEAS CZ, s.r.o., 756 61 Roznov pod Radhostem (CZ); Vysoké Ucení Technické V Brne, 601 90 Brno (CZ)
(72) Inventor: Bursik, Martin, 76001 Zlin (CZ); Jankovsky, Jaroslav, 62100 Brno-Reckovice (CZ); Reznicek, Michal, 68712 Nedachlebice (CZ)
(74) Representative: Malusek, Jiri

(56) References cited:
- WO-A1-2010/036383
- US-A- 4 906 596
- US-A1- 2007 194 411
- US-B1- 6 810 929

## Description

### Background of the invention

The invention concerns the method of creating an interlayer on a glass testing substrate intended for sticking chips and an applying device for carrying out of the method.

### State of the art

During completing and seldering of mainboards in the field of microelectrical technology production, a fluxing agent is spread on the mainboards. After seldering residues have to be removed from a mainboard's surface, for example by washing or cleaning.

The cleaning process is carried out by splashing it either in deionized water or in an organic dissolving agent, for example isopropylalkocol, acetone, petrol etc., or in mixture of them, and in liquids of emulsion type, which are specially intended for it, for example liquid named "Cestrol", in hight temperature range 50°C to 80°C.

Evaluation of efficiency of the washing process and the cleaning process is done by testing board provided by chips on its upper surface, which is soiled in a know range by flux agent of known composition and afterwards it is cleaned by cleaning device during the cleaning cycle together with mainboards provided by chips. Apparently from that, the testing board is intended for evaluation of efficiency of the washing process of the washed mainboards.

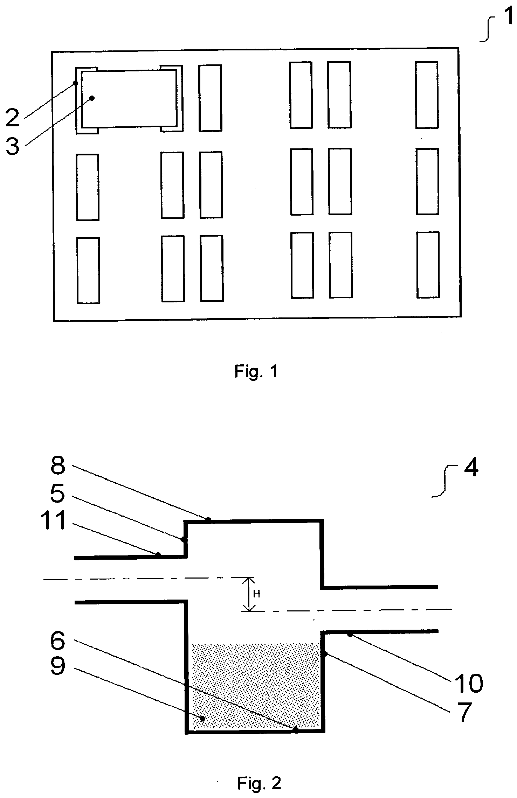

Fig. 1 presents the testing board, where first a glass paste is spread on the surface of the testing board. The glass paste is intended to fix chips on the board at exact distance from the surface of the testing board, i.e. from the glass substrate. The glass paste is spread for example in the shape of "railroad cross-ties", its mean in paralel discontinuous lines, see the Fig. 1. Afterwards, the chips are fixed by glue on the railroad cross-ties.

Because the chips where fixed directly to the smooth surface of the glass paste, as it is known from the state of the art, insufficient adhesion and further tearing the chips of the glass paste often appeared during its washing.

Another way how to fix it, is etching the surface of the glass paste by acid hydrogen fluoride. Also this way is not sufficient enought, because the testing substrate is going to be matt. The matted glass reduces possibility of optical evaluation of the cleaning process.

WO 2010/036383 describes methods for bonding electronic components to a substrate by applying an alkali silicate glass paste interlayer on the substrate.

The aim of the present invention is to present such method of creating the interlayer on the testing substrate for sticking chips and an applying device for carrying out of the method, which increases adhesion between the chips and the testing substrate without devaluation of the surface of the glass, and enables repeating possibility of checking of the washing process and the cleaning process during manufacturing.

### Features of the invention

The above mentioned disadvantages are considerably eliminated by method of creating an interlayer on a glass testing substrate intended for sticking chips, wherein a surface of the glass substrate is provided by at least one layer of a glass paste, afterwards the surface of the glass paste is dusted by smooth powder of thermal resistant material by applying device, and afterwards last layer is spread on the glass paste and before the glass paste becomes dry, the glass testing substrate is dried and burnt in the thermal range of 450°C to 650°C and in the time range of 5 to 20 min, and afterwards the surface of the glass testing substrate is washed by water or blown off by air.

In an advantageous embodiment the glass paste on the surface of the glass testing substrate is spread by silkscreen printing in to the shape of railroad cross-ties.

In another advantageous the powder of thermal resistant material is a diamont powder or a milled SiC or Al₂O₃.

### Description of the drawings

The invention will be further explained by use of drawings, in which Fig. 1 presents the surface of the glass substrate covered by glass paste provided in the shape of the railroad cross-ties and Fig. 2 presents an applying device intended to dust the surface of the glass paste by smooth powder of a thermal resistant material.

### Preferred embodiments of the invention

In order to avoid tearing off the chips from the glass testing substrate during repetitive checking of the washing process and the cleaning process, the surface of the glass testing substrate have to be provided by interlayer, which makes rough the surface of the glass paste. It is carried out by method of creating the interlayer according to the invention. The method is described below:

In the first phase of the method the surface of the glass substrate 1 is provided by glass paste in the shape of the railroad cross-ties 2 by silkscreen printing, which is intended to fix the chips 3, see Fig. 1. The first phase can be repeated many times. Imediately after last printing, before the glass paste becomes dry, the surface of the glass paste is dusted by smooth powder of a thermal resistant material. Placing of the powder on the surface of the substrate can be made by pouring or shooting it by highpressured air. Shooting of the powder on the surface of the glass paste can be carried out by applying device 4 according to the invention described below and presented in Fig. 2. Afterwards the drying process and the burning process follows in the thermal range of 450°C to 650°C and in the time range of 5 to 20 min, advantageously 10 min. By this way the powder is catched in the surface of the glass paste and an adhesive matt interlayer, suitable for fixing, is created. When the cooling process is done an uncatched powder is washed down by water or blown down by air. The free powder can not be removed mechanically to avoid matting of the glass, because the matt glass disallows following optical operations. Subsequently the roughed glass paste is provided by sticking to fix the chips to the surface of the substrate.

As mentioned above, the shooting of the powder the applying device 4 according to the invention presented in Fig. 2 can be used. The applying device 4 is comprising a pressure container 5 interconnected with an inlet of pressurized air, where the powder of a thermal resistant material is stored. The pressure container 5 is comprising a bottom 6, a wall 7 and a lid 8. The applying device 4 further consists of an inlet 10 of pressurized air, which is interconnected through the wall 7 to the pressure container 5, and further is comprising a discharge nozzle 11 protruding through the wall 7 from the pressure container 5.

The axis of the inlet 10 and the axis of the discharge noozle 11 are not identical. The difference between them is defined by hight H between those respective axes. The distance between the axis of the inlet 10 and the bottom 6 of the pressure container 5 is less than the distance between the axis of the discharge nozzle 11 and the bottom 6 of the pressure container 5. Air comes through the inlet 10 to the pressure container 5 and impacts to the opposite wall of the wall 7 of the pressure container 5. Because of that the air is whirlpooling and is easy to be mixed with the powder 9 so a mixed substance is created. Afterwards the mixed substance is spread by the discharge nozzle 11 on the glass paste.

Advantageousely the grain of the powder 9 has a size in a range of 5 µm to 150 µm. The powder 9 can be a diamont powder, milled SiC, Al₂O₃ etc.

Due to the created interlayer, which is made by the presented method, the adhesion of the chips to the surface furnished by that interlayer is much higher. It avoids tearing of the chips from the board and enables repetitive possibility of its use for checking of the washing process and the cleaning process and for further evaluation of it.
for checking of the washing process and the cleaning process and for further evaluation of it.

## Claims

1. Method of creating an interlayer on a glass testing substrate intended for sticking chips **characterised in, that** a surface of the glass substrate (1) is provided by at least one layer of a glass paste, afterwards the surface of the glass paste is dusted by smooth powder of thermal resistant material by applying device, and afterwards last layer is spread on the glass paste and before the glass paste becomes dry, the glass testing substrate 1 is dried and burnt in the thermal range of 450°C to 650°C and in the time range of 5 to 20 min, and afterwards the surface of the glass testing substrate (1) is washed by water or blown off by air.

2. Method of creating the interlayer according to the claim 1 **characterised in, that** the glass paste on the surface of the glass testing substrate (1) is spread by silkscreen printing in to the shape of railroad cross-ties (2).

3. Method of creating the interlayer according to the claim 1 or 2 **characterised in, that** the powder (9) of thermal resistant material is a diamond powder or a milled SiC or Al₂O₃.

## Patentansprüche

1. Verfahren zur Erzeugung einer Zwischenschicht auf einem Glastestsubstrat zum Aufkleben von Chips **dadurch gekennzeichnet, dass** auf die Oberfläche des Glastestsubstrates (1) mindestens eine Schicht der Glaspasta aufgetragen wird, wonach unmittelbar nach dem Auftragen der letzten Schicht der Glaspasta, vor der Trocknung der Glaspasta, die Oberfläche der Glaspasta mit einem feinen Pulver aus einem temperaturbeständigen Werkstoff bestaubt wird, und zwar mittels der Auftragsvorrichtung, wonach das Glastestsubstrat (1) trocken wird und dann wird es bei Temperatur von 450° C bis 650° C binnen 5 bis 20 Minuten abgebrannt, wonach die Oberfläche des Glastestsubstrates (1) mit Wasser abgespült oder mit Luftstrom abgeblasen wird.

2. Verfahren zur Erzeugung einer Zwischenschicht nach Anspruch 1 **dadurch gekennzeichnet, dass** die Glaspasta auf die Oberfläche des Glastestsubstrates mittels Siebdruck in die Form von Schwellen aufgetragen wird.

3. Verfahren zur Erzeugung einer Zwischenschicht nach Anspruch 1 oder 2 **dadurch gekennzeichnet, dass** der temperaturbeständige Pulverwerkstoff entweder Diamantpulver oder gemahlene SiC oder Al2O3 ist.

## Revendications

1. Le procédé de création de couche intermédiaire sur un substrat de test de verre conçu pour coller des puces **caractérisé en ce que** sur la surface d'un substrat de test de verre (1) est appliquée au moins une couche de pâte de verre, ensuite immédiatement après l'appliquation de la dernière couche de pâte de verre, avant le séchage de pâte de verre, la surface de pâte de verre est poudrée par une poussière subtile fabriquée de la matière résistante à la température à l'aide du dispositif de distribution, ensuite un substrat de test de verre (1) est séché et brûlé avec la témpérature de 450 °C à 650 °C pendant la période de 5 à 20 minutes, ensuite la surface d'un substrat de test de verre (1) est rincée par l'eau ou soufflée par le flux d'air.

2. Le procédé de création de couche intermédiaire selon la revendication 1 **caractérisé en ce que** la pâte de verre est appliquée sur la surface d'un substrat de test de verre (1) par la sérigraphie en forme des traverses de chemin de fer (2).

3. Le procédé de création de couche intermédiaire selon la revendication 1 ou 2 **caractérisé en ce que** la poussière fabriquée de la matière résistante à la température est la poussière de diamant ou SiC en poudre ou Al₂O₃.
